# EUROPEAN PATENT APPLICATION

(11) **EP 4 776 696 A1**
(43) Date of publication of application: **15.07.2026**
(21) Application number: 24869962.1
(22) Date of filing: 08.07.2024
(51) Int. Cl.: H04W 40/22

(54) **COMMUNICATION METHOD AND COMMUNICATION APPARATUS**

(30) Priority: 28.09.2023 CN 202311287384
(71) Applicant: HUAWEI TECHNOLOGIES CO., LTD., Shenzhen 518129 (CN)
(72) Inventor: WEI, Xinpeng, Shenzhen, Guangdong 518129 (CN); LI, Hancheng, Shenzhen, Guangdong 518129 (CN); ZHOU, Kai, Shenzhen, Guangdong 518129 (CN); ZHOU, Han, Shenzhen, Guangdong 518129 (CN)
(74) Representative: Epping - Hermann - Fischer
(86) International application number: PCT/CN2024/104185
(87) International publication number: WO 2025/066405

(57) **Abstract**

This application provides a communication method and a communication apparatus. The method includes: A session management network element receives first information, where the first information includes information about an application, or a data network name and/or single-network slice selection assistance information, where the data network name and/or the single-network slice selection assistance information correspond/corresponds to a data connection session, and transmission of data of the application or the data connection session is performed via a media over quick user datagram protocol MoQ transport protocol. The session management network element obtains information about at least one MoQ relay based on the first information, where the information about the at least one MoQ relay is used to establish a connection between user equipment and a first MoQ relay of the MoQ relay. The session management network element sends second information, where the second information includes the information that is about the at least one MoQ relay and that is sent to the user equipment. According to the method, the user equipment can obtain the information about the MoQ relay to establish the connection, to perform data transmission based on the connection.

## Description

This application claims priority to Chinese Patent Application No. 202311287384.5, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A media over quick user datagram protocol (Quick UDP Internet Connections, QUIC) (Media over QUIC, MoQ) transport protocol architecture includes a client, a relay node, and a server, and can provide end-to-end encryption support. The server sends media data and media metadata to the relay node, and the relay node can perform processing such as forwarding, buffering, and discarding on an object (object) based on received metadata of the object. In the 3rd generation partnership project (3rd generation partnership project, 3GPP), a user plane network element (User Plane Function, UPF) is responsible for identifying media information. However, because end-to-end encryption is used for an MoQ protocol, if the UPF is used to process a data flow of an XR service transmitted based on MoQ, an MoQ connection needs to be first established between user equipment (User Equipment, UE) and the UPF.

Therefore, how to enable the user equipment to obtain information about an MoQ relay in an additional manner to establish the connection is a problem that needs to be urgently resolved currently.

### SUMMARY

This application provides a communication method and a communication apparatus. User equipment can obtain information about an MoQ relay to establish a connection, to perform transmission of a data flow of an XR service based on the connection.

According to a first aspect, a communication method is provided. The method may be performed by a session management network element. The session management network element herein may be the session management network element, or may be a processor, a module, a chip, a chip system, or the like that is in the session management network element and that implements the method. This is not limited in this application. The method includes:
the session management network element receives first information, where the first information includes information about an application, or the first information includes a data network name and/or single-network slice selection assistance information, where the data network name and/or the single-network slice selection assistance information correspond/corresponds to a data connection session, and transmission of data of the application or the data connection session is performed via a media over quick user datagram protocol MoQ transport protocol. The session management network element obtains information about at least one MoQ relay based on the first information, where the information about the at least one MoQ relay is used to establish a connection between user equipment and a first MoQ relay of the at least one MoQ relay. The session management network element sends second information, where the second information includes the information that is about the at least one MoQ relay and that is sent to the user equipment.

By way of example but not limitation, in this application, the first information may be a data network name (data network name, DNN).

By way of example but not limitation, in this application, the first information may be single-network slice selection assistance information (single-network slice selection assistance information, S-NSSAI).

By way of example but not limitation, in this application, the first information may be a data network name and single-network slice selection assistance information. The data network name and the single-network slice selection assistance information may be in a same information element, or may not be in a same information element.

It should be understood that the first information may be included in a data connection session context establishment request message. In this case, the first information includes the data network name and/or the single-network slice selection assistance information. The data connection session may be a protocol data unit (Protocol Data Unit, PDU) session or another session. This is not limited in embodiments of this application.

It should be understood that, that the transmission of the data of the data connection session is performed based on the MoQ protocol may be understood as that the transmission of the data carried in the data connection session is performed through an MoQ relay.

It should be noted that the transmission of data of the application carried in the data connection session can be performed based on the MoQ protocol, or can be performed not based on the MoQ protocol.

By way of example but not limitation, both an application 1 and an application 2 are carried in the data connection session. Transmission of data corresponding to the application 1 is performed based on the MoQ protocol, and transmission of data corresponding to the application 2 may be performed not based on the MoQ protocol.

It should be understood that, that the first information includes the information about the application may be understood as that the first information is the information about the application. It should be understood that the first information may be included in a domain name system context notify request message. In this case, the first information includes the information about the application.

It should be understood that a specific implementation of the information about the application is not limited in embodiments of this application. For example, the information about the application is a fully qualified domain name (Fully Qualified Domain Name, FQDN) of the application.

It should be understood that, that the transmission of the data of the application is performed based on the MoQ protocol may be understood as that transmission of service data corresponding to the application is performed through the MoQ relay.

It should be understood that, that the user equipment establishes the connection to the MoQ relay may be understood as that an application in the user equipment establishes a connection to the MoQ relay.

It should be understood that, that the session management network element obtains the information about the at least one MoQ relay based on the first information is that the session management network element obtains the information about the at least one MoQ relay based on the information about the application, or obtains the information about the at least one MoQ relay based on the data network name and/or the single-network slice selection assistance information.

Based on the foregoing solution, the session management network element may obtain the information about the at least one MoQ relay based on the information that is about the application and that is in the first information, or the data network name and/or the single-network slice selection assistance information in the first information, and return the information about the at least one MoQ relay by using the second information, so that the user equipment can establish the connection to the first MoQ relay of the at least one MoQ relay based on the information about the at least one MoQ relay, and perform transmission of the data corresponding to the application based on the connection.

With reference to the first aspect, in some implementations of the first aspect, the method further includes: When the first information includes the information about the application, the session management network element determines, based on the information about the application, to select an MoQ relay for the user equipment accessing the application. When the first information includes the data network name and/or the single-network slice selection assistance information, the session management network element determines, based on the data network name and/or the single-network slice selection assistance information, to select an MoQ relay for the data connection session.

It should be understood that before obtaining information about the MoQ relay, the session management network element may determine to select the MoQ relay for the user equipment accessing the application or for the data connection session corresponding to the data network name and/or the single-network slice selection assistance information.

It should be understood that a specific manner in which the session management network element determines, based on the information about the application, to choose to support the MoQ relay for the user equipment accessing the application is not limited in embodiments of this application. By way of example but not limitation, the session management network element locally configures an application information list that requires to support the MoQ relay, and after receiving the first information, matches, with the list, the information that is about the application and that is carried in the first information, to determine whether to select the MoQ relay for the user equipment accessing the application.

It should be understood that a specific manner in which the session management network element determines, based on the data network name and/or the single-network slice selection assistance information, to select the MoQ relay for the data connection session corresponding to the data network name and/or the single-network slice selection assistance information is not limited in embodiments of this application.

By way of example but not limitation, the session management network element locally configures a data network name list that requires to support the MoQ relay, and after receiving the first information, matches, with the list, the data network name carried in the first information, to determine whether to select the MoQ relay for the data connection session corresponding to the data network name.

By way of example but not limitation, the session management network element locally configures a single-network slice selection assistance information list that requires to support the MoQ relay, and after receiving the first information, matches, with the list, the single-network slice selection assistance information carried in the first information, to determine whether to select the MoQ relay for the data connection session corresponding to the single-network slice selection assistance information.

Based on the foregoing solution, after receiving the first information, the session management network element may determine, based on the first information and a local configuration, to choose to support the MoQ relay for the application or the data connection session requested to be established.

With reference to the first aspect, in some implementations of the first aspect, that the session management network element obtains the information about the at least one MoQ relay based on the first information includes: The session management network element determines the information about the at least one MoQ relay based on a local configuration, where the local configuration includes the information about the at least one MoQ relay.

Based on the foregoing solution, the local configuration of the session management network element includes the information about the at least one MoQ relay. Therefore, after the first information is received, the information about the at least one MoQ relay can be determined based on the local configuration.

With reference to the first aspect, in some implementations of the first aspect, the MoQ relay is deployed in a user plane network element. That the session management network element obtains the information about the at least one MoQ relay based on the first information includes: The session management network element determines information about at least one user plane network element based on a local configuration, where the local configuration includes the information about the at least one user plane network element and information about an MoQ relay deployed in each of the at least one user plane network element. The session management network element determines, based on the information about the at least one user plane network element, the information about the MoQ relay deployed in each of the at least one user plane network element.

It should be understood that, in this application, that the MoQ relay is deployed in the user plane network element may be understood as that the MoQ relay is integrated into the user plane network element, or that the user plane network element supports the MoQ relay.

Based on the foregoing solution, the local configuration of the session management network element includes the information about the at least one user plane network element and the information about the MoQ relay corresponding to the at least one user plane network element. Therefore, after the first information is received, the information about the MoQ relay deployed in each of the at least one user plane network element can be determined based on the local configuration and by determining the information about the at least one user plane network element. With reference to the first aspect, in some implementations of the first aspect, the MoQ relay is deployed in a user plane network element. That the session management network element obtains the information about the at least one MoQ relay based on the first information includes: The session management network element determines, based on a local configuration, information about at least one user plane network element in which the MoQ relay is deployed. The session management network element sends, based on the information about the at least one user plane network element in which the MoQ relay is deployed, third information to the at least one user plane network element in which the MoQ relay is deployed, where the third information is used to request information about the at least one MoQ relay deployed in a corresponding user plane network element. The session management network element receives fourth information, where the fourth information includes the information about the at least one MoQ relay deployed in the corresponding user plane network element.

It should be understood that, that the MoQ relay is deployed in the user plane network element may be understood as that the MoQ relay is integrated into the user plane network element, or that the user plane network element supports the MoQ relay.

Based on the foregoing solution, the local configuration of the session management network element includes the information about the at least one user plane network element supporting the MoQ relay. Therefore, after receiving the first information, the session management network element can request, based on the information about the at least one user plane network element supporting the MoQ relay, the at least one user plane network element to provide the information about the MoQ relay deployed in the corresponding user plane network element.

With reference to the first aspect, in some implementations of the first aspect, the MoQ relay is deployed in a user plane network element. That the session management network element obtains the information about the at least one MoQ relay based on the first information includes: The session management network element sends a first request message to a network repository function, where the first request message includes information indicating that an MoQ relay is supported, the network repository function is configured to maintain information about at least one user plane network element and the information about the at least one MoQ relay, and the at least one user plane network element corresponds to the at least one MoQ relay. The session management network element receives a first response message from the network repository function, where the first response message includes the information about the at least one user plane network element and information about an MoQ relay deployed in each of the at least one user plane network element.

With reference to the first aspect, in some implementations of the first aspect, the MoQ relay is deployed in a user plane network element. That the session management network element obtains the information about the at least one MoQ relay based on the first information includes: The session management network element sends a first request message to a network repository function, where the first request message includes information indicating that an MoQ relay is supported, the network repository function is configured to maintain information about at least one user plane network element, and the at least one user plane network element supports the MoQ relay. The session management network element receives a first response message from the network repository function, where the first response message includes the information about the at least one user plane network element. The session management network element sends third information to the at least one user plane network element based on the information about the at least one user plane network element, where the third information is used to request information about the MoQ relay deployed in a corresponding user plane network element. The session management network element receives fourth information, where the fourth information includes the information about the MoQ relay deployed in the corresponding user plane network element. It should be understood that the information indicating that the MoQ relay is supported may be understood as information indicating that a target user plane network element needs to support an MoQ relay function.

Based on the foregoing solution, after receiving the first information, the session management network element may send the first request message to the network repository function that maintains the information about the at least one user plane network element, and include, in the request message, an identifier supporting an MoQ relay function. Therefore, the network repository function can return, to the session management network element based on the information, the first response message including the information about the at least one user plane network element supporting the MoQ relay, and/or the information about the at least one MoQ relay. In addition, when the first response message includes only the information about the at least one user plane network element, the session management network element may request the information about the at least one MoQ relay from the at least one user plane network element.

With reference to the first aspect, in some implementations of the first aspect, information about the MoQ relay in the information about the at least one MoQ relays includes at least one of the following: an address of the MoQ relay, port information of the MoQ relay, or connection context information of the MoQ relay.

Based on the foregoing solution, the information that is of the MoQ relay and that is returned to the user equipment may include at least one of the address of the MoQ relay, the port information of the MoQ relay, or the connection context information of the MoQ relay. Therefore, the user equipment can establish the connection to the MoQ relay based on the information of the MoQ relay, and perform transmission of the data corresponding to the application based on the connection.

According to a second aspect, a communication method is provided. The method may be performed by a network repository function. The network repository function herein may be a session management network element, or may be a processor, a module, a chip, a chip system, or the like that is in the network repository function and that implements the method. This is not limited in this application. The method includes:
the network repository function receives a first request message, where the first request message includes information indicating that a media over quick user datagram protocol transport protocol MoQ relay is supported, and the network repository function is configured to maintain information about at least one user plane network element, and/or information about at least one MoQ relay. The network repository function sends a first response message, where the first response message includes the information about the at least one user plane network element in which the MoQ relay is deployed, and/or the information about the at least one MoQ relay.

It should be understood that the information indicating that the MoQ relay is supported may be understood as information indicating that a target user plane network element needs to support an MoQ relay function.

With reference to the second aspect, in some implementations of the second aspect, the network repository function determines, based on the first request message, the information about the at least one user plane network element in which the MoQ relay is deployed, and/or the information about the at least one MoQ relay.

It should be understood that, after receiving the first request message, the network repository function determines, from a local configuration based on the information indicating that the target user plane network element supports the MoQ relay function, the information about the at least one user plane network element in which the MoQ relay is deployed, and/or the information about the at least one MoQ relay.

Based on the foregoing solution, after receiving the first request message, the network repository function may determine information about a user plane network element, and/or information about an MoQ relay based on information about a network function maintained by the network repository function, and return, to the session management network element by using the first response message, the information about the at least one user plane network element supporting the MoQ relay, and/or the information about the at least one MoQ relay. Therefore, the session management network element can determine the information about the at least one MoQ relay based on the first response message, and finally return the information to user equipment, so that the user equipment can establish a connection to one of the at least one MoQ relay based on the information about the at least one MoQ relay.

With reference to the second aspect, in some implementations of the second aspect, information about the MoQ relay in the information about the at least one MoQ relays includes at least one of the following: an address of the MoQ relay, port information of the MoQ relay, or connection context information of the MoQ relay.

According to a third aspect, a communication method is provided. The method may be performed by user equipment. The user equipment herein may be a session management network element, or may be a processor, a module, a chip, a chip system, or the like that is in the user equipment and that implements the method. This is not limited in this application. The method includes:
the user equipment sends fifth information, where the fifth information includes information about an application, or the fifth information includes a data network name and/or single-network slice selection assistance information, where the data network name and/or the single-network slice selection assistance information correspond/corresponds to a data connection session, and transmission of data of the application or the data connection session is performed via a media over quick user datagram protocol MoQ transport protocol. The user equipment receives sixth information, where the sixth information includes information about at least one MoQ relay. The user equipment establishes a connection to a first MoQ relay of the at least one MoQ relay based on the information about the at least one MoQ relay.

It should be understood that, for the data of the application and the data of the data connection session, refer to the related descriptions of the first aspect. Details are not described herein again. With reference to the third aspect, in some implementations of the third aspect, the information about the at least one MoQ relay is determined based on the information about the application, or the data network name and/or the single-network slice selection assistance information.

With reference to the third aspect, in some implementations of the third aspect, the fifth information is included in a data connection session establishment request message, the data connection session is established based on the data connection session request message, and the information about the at least one MoQ relay is determined for the data connection session.

For example, the data connection session may be a PDU session, and the data connection session establishment request message may be a PDU session establishment request message. This is not limited in embodiments of this application.

With reference to the third aspect, in some implementations of the third aspect, the fifth information is included in a domain name system query request message, and the information about the at least one MoQ relay is determined for the application.

With reference to the third aspect, in some implementations of the third aspect, information about the MoQ relay in the information about the at least one MoQ relays includes at least one of the following: an address of the MoQ relay, port information of the MoQ relay, or connection context information of the MoQ relay.

According to a fourth aspect, a communication apparatus is provided. The apparatus includes a transceiver unit and a processing unit. The transceiver unit is configured to receive first information, where the first information includes information about an application, or the first information includes a data network name and/or single-network slice selection assistance information, where the data network name and/or the single-network slice selection assistance information correspond/corresponds to a data connection session, and transmission of data of the application or the data connection session is performed via a media over quick user datagram protocol MoQ transport protocol. The processing unit is configured to obtain information about at least one MoQ relay based on the first information, where the information about the at least one MoQ relay is used to establish a connection between user equipment and a first MoQ relay of the at least one MoQ relay. The transceiver unit is further configured to send second information, where the second information includes the information that is about the at least one MoQ relay and that is sent to the user equipment.

With reference to the fourth aspect, in some implementations of the fourth aspect, the processing unit is further configured to: When the first information includes the information about the application, the session management network element determines, based on the information about the application, to select an MoQ relay for the user equipment accessing the application; and when the first information includes the data network name and/or the single-network slice selection assistance information, the session management network element determines, based on the data network name and/or the single-network slice selection assistance information, to select an MoQ relay for the data connection session.

With reference to the fourth aspect, in some implementations of the fourth aspect, the processing unit is specifically configured to: determine the information about the at least one MoQ relay based on a first request message and a local configuration, where the local configuration includes the information about the at least one MoQ relay.

With reference to the fourth aspect, in some implementations of the fourth aspect, the MoQ relay is deployed in a user plane network element. The processing unit is further configured to: determine information about at least one user plane network element based on a local configuration, where the local configuration includes the information about the at least one user plane network element and information about an MoQ relay deployed in each of the at least one user plane network element; and determine, based on the information about the at least one user plane network element, the information about the MoQ relay deployed in each of the at least one user plane network element.

With reference to the fourth aspect, in some implementations of the fourth aspect, the MoQ relay is deployed in a user plane network element, and the processing unit is further configured to determine, based on a local configuration, information about at least one user plane network element in which the MoQ relay is deployed. The transceiver unit is further configured to send, based on the information about the at least one user plane network element in which the MoQ relay is deployed, third information to the at least one user plane network element in which the MoQ relay is deployed, where the third information is used to request to obtain the information about the at least one MoQ relay. The transceiver unit is further configured to receive fourth information, where the fourth information includes the information about the at least one MoQ relay.

With reference to the fourth aspect, in some implementations of the fourth aspect, the MoQ relay is deployed in a user plane network element, and the transceiver unit is further configured to: send the first request message to a network repository function, where the first request message includes information indicating that an MoQ relay is supported, the network repository function is configured to maintain information about at least one user plane network element and the information about the at least one MoQ relay, and the at least one user plane network element corresponds to the at least one MoQ relay; and receive a first response message from the network repository function, where the first response message includes the information about the at least one user plane network element and information about an MoQ relay deployed in each of the at least one user plane network element.

With reference to the fourth aspect, in some implementations of the fourth aspect, the MoQ relay is deployed in a user plane network element, and the transceiver unit is further configured to: send a first request message to a network repository function, where the first request message includes information indicating that an MoQ relay is supported, the network repository function is configured to maintain information about at least one user plane network element, and the at least one user plane network element supports the MoQ relay; and receive a first response message from the network repository function, where the first response message includes the information about the at least one user plane network element in which the MoQ relay is deployed. The processing unit is further configured to send third information to the at least one user plane network element in which the MoQ relay is deployed, where the third information is used to request information about the MoQ relay deployed in a corresponding user plane network element. The transceiver unit is further configured to receive fourth information, where the fourth information includes the information about the MoQ relay deployed in the corresponding user plane network element.

With reference to the fourth aspect, in some implementations of the fourth aspect, information about the MoQ relay in the information about the at least one MoQ relays includes at least one of the following: an address of the MoQ relay, port information of the MoQ relay, or connection context information of the MoQ relay.

According to a fifth aspect, a communication apparatus is provided. The apparatus includes a transceiver unit. The transceiver unit is configured to receive a first request message, where the first request message includes information indicating that a media over quick user datagram protocol transport protocol MoQ relay is supported, and the network repository function is configured to maintain information about at least one user plane network element, and/or information about at least one MoQ relay. The transceiver unit is further configured to send a first response message, where the first response message includes the information about the at least one user plane network element in which the MoQ relay is deployed, and/or the information about the at least one MoQ relay.

With reference to the fifth aspect, in some implementations of the fifth aspect, the apparatus further includes a processing unit. The processing unit is configured to determine, based on the first request message, the information about the at least one user plane network element in which the MoQ relay is deployed, and/or the information about the at least one MoQ relay.

With reference to the fifth aspect, in some implementations of the fifth aspect, information about the MoQ relay in the information about the at least one MoQ relays includes at least one of the following: an address of the MoQ relay, port information of the MoQ relay, or connection context information of the MoQ relay.

According to a sixth aspect, a communication apparatus is provided. The apparatus includes a transceiver unit and a processing unit. The transceiver unit is configured to send fifth information, where the fifth information includes information about an application, or the fifth information includes a data network name and/or single-network slice selection assistance information, where the data network name and/or the single-network slice selection assistance information correspond/corresponds to a data connection session, and transmission of data of the application or the data connection session is performed via a media over quick user datagram protocol MoQ transport protocol. The transceiver unit is further configured to receive sixth information, where the sixth information includes information about at least one MoQ relay. The processing unit is configured to establish a connection to a first MoQ relay of the at least one MoQ relay based on the information about the at least one MoQ relay.

With reference to the sixth aspect, in some implementations of the sixth aspect, the information about the at least one MoQ relay is determined based on the information about the application, or the information about the at least one MoQ relay is determined based on the data network name and/or the single-network slice selection assistance information.

With reference to the sixth aspect, in some implementations of the sixth aspect, the fifth information is included in a data connection session establishment request message, the data connection session is established based on the data connection session request message, and the information about the at least one MoQ relay is determined for the data connection session.

With reference to the sixth aspect, in some implementations of the sixth aspect, the fifth information is included in a domain name system query request message, and the information about the at least one MoQ relay is determined for the application.

With reference to the sixth aspect, in some implementations of the sixth aspect, information about the MoQ relay in the information about the at least one MoQ relays includes at least one of the following: an address of the MoQ relay, port information of the MoQ relay, or connection context information of the MoQ relay.

According to a seventh aspect, this application provides a communication apparatus. The communication apparatus includes a processor, configured to implement the method in any one of the first aspect to the third aspect or the implementations of the first aspect to the third aspect. The processor is coupled to a memory. The memory is configured to store instructions and data. When the processor executes the instructions stored in the memory, the method in any one of the first aspect to the third aspect or the implementations of the first aspect to the third aspect can be implemented.

Optionally, the communication apparatus may further include the memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or a communication interface of another type.

In an example, the communication apparatus may be a session management network element, may be an apparatus, a module, a chip, or the like disposed in the session management network element, or may be an apparatus that can be used together with the network device.

In another example, the communication apparatus may be a network repository function, may be an apparatus, a module, a chip, or the like disposed in the network repository function, or may be an apparatus that can be used together with the network device.

In still another example, the communication apparatus may be user equipment, may be an apparatus, a module, a chip, or the like disposed in the user equipment, or may be an apparatus that can be used together with the terminal device.

According to an eighth aspect, this application provides a communication system, including: a session management network element, configured to perform the method in any one of the first aspect or the implementations of the first aspect; a network repository function, configured to perform the method in any one of the second aspect or the implementations of the second aspect; and user equipment, configured to perform the method in any one of the third aspect or the implementations of the third aspect.

According to a ninth aspect, this application provides a communication system, including the session management network element in any one of the fourth aspect or the implementations of the fourth aspect, the network repository function in any one of the fifth aspect or the implementations of the fifth aspect, and the user equipment in any one of the sixth aspect or the implementations of the sixth aspect.

According to a tenth aspect, this application further provides a computer program. When the computer program runs on a computer, the computer is caused to perform the method in any one of the first aspect to the third aspect or the implementations of the first aspect to the third aspect.

According to an eleventh aspect, this application further provides a computer program product, including instructions. When the instructions are run on a computer, the computer is caused to perform the method in any one of the first aspect to the third aspect or the implementations of the first aspect to the third aspect.

According to a twelfth aspect, this application further provides a computer-readable storage medium. The computer-readable storage medium stores a computer program or instructions. When the computer program or the instructions are run on a computer, the computer is caused to perform the method in any one of the first aspect to the third aspect or the implementations of the first aspect to the third aspect.

According to a thirteenth aspect, this application further provides a chip. The chip is configured to read a computer program stored in a memory, to perform the method in any one of the first aspect to the third aspect or the implementations of the first aspect to the third aspect. Alternatively, the chip includes a circuit configured to perform the method in any one of the first aspect to the third aspect or the implementations of the first aspect to the third aspect.

According to a fourteenth aspect, this application further provides a chip system. The chip system includes a processor, configured to support an apparatus in implementing the method in any one of the first aspect to the third aspect or the implementations of the first aspect to the third aspect. In a possible design, the chip system further includes a memory. The memory is configured to store a program and data that are necessary for the apparatus. The chip system may include a chip, or may include a chip and another discrete component.

For technical effects of the solutions provided in the fourth aspect to the fourteenth aspect, refer to corresponding descriptions of the first aspect to the third aspect. Details are not described again.

### BRIEF DESCRIPTION OF DRAWINGS

FIG. 1 is a block diagram of an example of a wireless communication system architecture to which this application is applicable;
FIG. 2 is a diagram of a system architecture or a scenario to which embodiments of this application are applied;
FIG. 3 is a schematic flowchart of a service discovery method;
FIG. 4 is a diagram of an MoQ protocol architecture;
FIG. 5 is an example flowchart of a method 500 according to an embodiment of this application;
FIG. 6 is an example flowchart of a method 600 according to an embodiment of this application;
FIG. 7 is a diagram of a structure of a communication apparatus 1000 according to an embodiment of this application;
FIG. 8 is a diagram of a structure of a communication apparatus 2000 according to an embodiment of this application; and
FIG. 9 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems.

The technical solutions provided in this application may be further applied to machine type communication (machine type communication, MTC), a long term evolution-machine communication (Long Term Evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to other devices (vehicle to X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

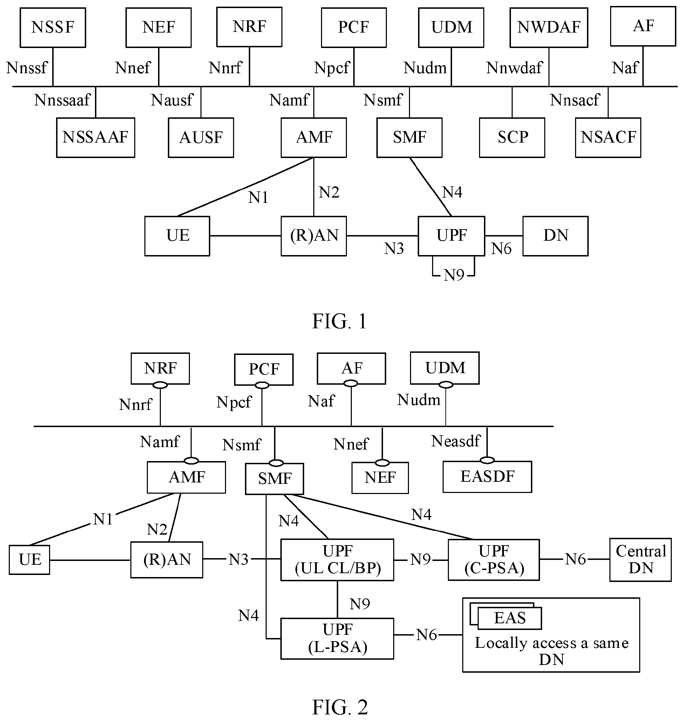

FIG. 1 is a block diagram of an example of a wireless communication system architecture to which this application is applicable. As shown in the figure, the system architecture may specifically include the following network elements.
1. User equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network or a terminal device in a future evolved public land mobile communication network (public land mobile network, PLMN), and the like. This is not limited in embodiments of this application.

By way of example but not limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that are dedicated to only one type of application function and need to work with other devices such as smartphones, for example, various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for human-machine interconnection and thing-thing interconnection.

It should be noted that the terminal device and an access network device may communicate with each other by using an air interface technology (for example, an NR or LTE technology). Terminal devices may also communicate with each other by using an air interface technology (for example, an NR or LTE technology).

In embodiments of this application, an apparatus configured to implement a function of the terminal device may be a terminal device, or may be an apparatus that may support the terminal device in implementing the function, for example, a chip system or a chip. The apparatus may be mounted in the terminal device. In embodiments of this application, the chip system may include a chip, or may include a chip and another discrete component.

2. A (radio) access network ((radio) access network, (R)AN) may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses the AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), code division multiple access (code division multiple access, CDMA), and the like. The AN device may allow interconnection and interworking performed between a terminal device and a 3GPP core network by using the non-3GPP technology. The AN device may be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a radio relay node, a radio backhaul node, a transmission point (transmission point, TP), a transmission reception point (transmission reception point, TRP), or the like, may be a gNB or a transmission point (TRP or TP) in a 5G (for example, NR) system, or one antenna panel or a group of antenna panels (including a plurality of antenna panels) of a base station in a 5G system, or may be a network node constituting a gNB or a transmission point, for example, a distributed unit (distributed unit, DU), a base station in a next generation 6G communication system, or the like. A specific technology and a specific device form that are used by the AN device are not limited in embodiments of this application.

3. A user plane function (user plane function, UPF) network element is mainly configured to receive and forward user plane data. For example, the UPF may receive the user plane data from a data network (data network, DN), and send the user plane data to a terminal device via an AN device. The UPF may alternatively receive the user plane data from a terminal device via an AN device, and forward the user plane data to a DN. A UPF directly connected to the DN through an N6 interface in a session is referred to as a protocol data unit (protocol data unit, PDU) session anchor (PDU session anchor, PSA).

4. A data network (data network, DN) is an operator network that is mainly used to provide a data service for UE, for example, the internet (Internet), a third-party service network, or an IP multi-media service (IP multi-media service, IMS) network.

5. An access and mobility management function (access and mobility management function, AMF) network element is used for mobility management, access management, and the like, and may be configured to implement a function other than session management in functions of a mobility management entity (mobility management entity, MME), for example, a function of listening or access authorization/authentication.

6. A session management function (session management function, SMF) network element is mainly used for session management, internet protocol (internet protocol, IP) address assignment and management of a terminal device, selection of a manageable user plane function, termination of interfaces toward policy control and charging functions, downlink data notification, and the like.

7. A network exposure function (network exposure function, NEF) network element is mainly configured to securely expose, to the outside, a service, a capability, and the like that are provided by a 3rd generation partnership project (3GPP) network function.

8. A policy control (policy control function, PCF) network element is a unified policy framework for guiding network behavior, and provides policy rule information and the like for a control plane function network element (for example, an AMF or SMF network element).

9. An application function (application function, AF) network element is configured to: perform application-affected data routing, access a network exposure function network element, interact with a policy framework for policy control, and the like.

In addition, the foregoing network architecture further includes: a network slice selection function (network slice selection function, NSSF) network element, configured to manage information related to a network slice; and a network repository function (network repository function, NRF) network element, configured to: store a network function entity and description information of a service provided by the network function entity, and support functions such as service discovery and network element entity discovery.

In this network architecture, an N2 interface is an interface between the RAN and the AMF network element, and is configured to send a non-access stratum (non-access stratum, NAS) message and the like. An N3 interface is an interface between the RAN and the UPF network element, and is configured to perform transmission of user plane data and the like. An N4 interface is an interface between the SMF network element and the UPF network element, and is configured to perform transmission of information such as tunnel identification information of an N3 connection, data buffer indication information, and a downlink data notification message.

It may be understood that the foregoing network elements or functions may be network elements in a hardware device, or may be software functions running on dedicated hardware or virtualized functions instantiated on a platform (for example, a cloud platform).

For ease of description, that an access management function network element is an AMF network element, a session management network element is an SMF network element, and a policy control network element is a PCF network element is used as an example subsequently in this application. Further, the AMF network element may be briefly referred to as an AMF, the SMF network element may be briefly referred to as an SMF, and the PCF network element may be briefly referred to as a PCF. To be specific, in subsequent descriptions of this application, all AMFs may be replaced with access management function network elements, all SMFs may be replaced with session management network elements, and all PCFs may be replaced with policy control network elements.

For ease of description, in this application, an information transmission method is described by using an example in which an apparatus is an AMF entity, an SMF entity, or a PCF entity. For an implementation method in which the apparatus is a chip in the AMF entity, a chip in the SMF entity, or a chip in the PCF entity, refer to specific descriptions in which the apparatus is separately the AMF entity, the SMF entity, or the PCF entity. Details are not repeated.

In the network architecture shown in FIG. 1, the UE is connected to the AMF through an N1 interface, the RAN is connected to the AMF through the N2 interface, and the RAN is connected to the UPF through the N3 interface.

UPFs are connected to each other through an N9 interface, and the UPF is interconnected to the data network (data network, DN) through the N6 interface.

The SMF controls the UPF through the N4 interface.

In FIG. 1, N1, N2, N3, N4, and the like are interface sequence numbers. For meanings of these interface sequence numbers, refer to meanings defined in current standard protocols. This is not limited herein.

It should be understood that the foregoing network architecture applied to embodiments of this application is merely an example of a network architecture described from a perspective of a conventional point-to-point architecture and a service-based architecture, a network architecture to which embodiments of this application are applicable is not limited thereto, and any network architecture that may implement functions of the foregoing network elements is applicable to embodiments of this application.

FIG. 2 is a diagram of a system architecture or a scenario to which embodiments of this application are applied. The system may also be considered as that support for edge computing (edge computing, EC) may be introduced in the foregoing network architecture.

For ease of understanding of the technical solutions of this application, a protocol data unit (protocol data unit, PDU) session (session) is first briefly described.

A PDU session is a process of communication between user equipment UE and a data network DN. That the PDU session is established means that a data transmission path between the UE and the DN is established. Each PDU session supports one PDU session type (for example, an IPv4 type, an IPv6 type, an IPv4v6 type, an Ethernet (Ethenet) type, or an unstructured (unstructured) type). One PDU session may have a plurality of PDU session anchors (anchors). To support an optional routing function to the DN and support a service and session continuity (service and session continuity, SSC) mode (mode) 3, an SMF may control data routing of the PDU session, so that the PDU session can have a plurality of N6 interfaces. A UPF of each N6 interface may be referred to as a PDU session anchor (PDU session anchor, PSA). The plurality of PSAs of the single PDU session may be implemented in the following two manners.

Manner 1: An uplink classifier (uplink classifier, UL CL) is used in a PDU session.

The SMF may insert an uplink classifier "UL CL" into a data transmission path of the PDU session.

A function of the "UL CL" may be provided in the UPF to forward, to a specified path, a data packet that meets a service filtering rule. This is similar to a role of a routing table. Insertion and deletion of the "UL CL" are controlled by the SMF. The SMF may perform an operation on the UPF through an N4 interface. Certainly, the SMF also needs to consider a capability of the UPF, that is, whether the UPF supports the UL CL. When a "UL CL" is inserted into a data path of a PDU session, the PDU session has a plurality of PSAs. These PSAs provide a plurality of different paths for accessing a same DN. The function of the "UL CL" is to forward uplink service data to different PSAs based on a filter requirement and combine downlink data from a plurality of PSAs of the UE.

FIG. 2 may be considered as a scenario in which one PDU session has two PSAs. An uplink classifier (UL CL) is inserted on a UPF of a termination of an N3 interface. An anchor (a PSA 1) and an anchor (a PAS 2) are terminated on an N6 interface. Transmission is performed between an uplink classifier UPF and an anchor UPF through an N9 interface.

Manner 2: IPv6 multi-homing (multi-homing) is used in a PDU session.

One PDU session may be associated with a plurality of IPv6 prefixes. This is called a multi-homed PDU session. The multi-homed PDU session may access one data network DN through a plurality of PSAs. Data paths corresponding to the PSAs are finally aggregated to a common UPF. This common UPF has a "branching point" (branching point, BP) function, and is referred to as a branching point UPF. The branching point UPF forwards an uplink service packet to different PSAs upward and combines data from the PSAs downward. The branching point UPF may be used for charging statistics and rate control. The SMF controls insertion or removal of a branching point on the UPF through an N4 interface. Certainly, a capability of the UPF, that is, whether the UPF supports a branching point function, also needs to be considered.

FIG. 2 may be considered as a scenario in which one PDU session has two PSAs. A common UPF may transmit uplink data to different PSAs, for example, a PSA 1 and a PAS 2. The common UPF may further combine data from the PSAs.

In the system architecture shown in FIG. 2, the UPF (a UL CL/BP) may represent a UPF that provides a UL CL function, or a common UPF. To be specific, the UPF may transmit uplink data to different PSAs, for example, the PSA 1 and the PSA 2. Data paths corresponding to the PSAs are finally aggregated to the UPF, and the downlink data is combined to the UE.

In 4G and earlier conventional mobile network architectures and deployments, a user plane device is deployed basically in a tree topology. An uplink user packet passes through an access network device and a backhaul network, and finally accesses the data network through anchor gateways that are deployed in a centralized manner. These anchor gateways are usually deployed at a high location in the network, for example, a central equipment room in a large area. This topology structure is simple, and it is convenient for an operator to perform centralized service management and control and packet processing at an anchor. With explosive growth of mobile service traffic, it is increasingly difficult to support a fast-growing mobile service traffic model in this deployment manner. In the network in which the anchor gateways are deployed in the centralized manner, increased traffic is finally concentrated in a gateway and a core equipment room, and this imposes an increasingly high requirement on backhaul network bandwidth, an equipment room throughput, and a gateway specification. In addition, a long-distance backhaul network from an access point to an anchor gateway and a complex transmission environment cause high latency and jitter of user packet transmission.

Based on the preceding background, a concept of edge computing (Edge Computing, EC) is proposed in the industry. The EC distributes the UPF and a service processing capability to a network edge, to locally process distributed service traffic and avoid over-centralization of traffic. This can greatly reduce specification requirements on the core equipment room and the centralized gateway, reduce end-to-end (end-to-end, E2E) latency and jitter of user packets, and make deployment of ultra-low-latency services possible.

In an EC deployment scenario, some services may be served by a plurality of edge application servers (edge application servers, EASs) deployed in an edge data network (edge data network, EDN). The EAS may also be referred to as an application instance, an edge application instance, an MEC application (a server), an EAS function, or the like. Specifically, the edge application server may be an instance (instance) that is of a server application program (for example, social media software, augmented reality (augmented reality, AR), or virtual reality (virtual reality, VR)) and that is deployed and runs in the EDN. One application may deploy one or more EASs in one or more EDNs. EASs deployed and running in different EDNs may be considered as different EASs of one application. The EASs may share a domain name or use domain names different from those of applications deployed in a cloud. The domain name may be a fully qualified domain name (fully qualified domain name, FQDN), and may use any broadcast internet protocol (internet protocol, IP) address, or may use different IP addresses.

The edge data network EDN may be a local (local) data network. The local DN may also be understood as an access point of a data network that is close to an attachment point of a user. The data network is a service network of an operator or a third party, and may provide a service like an operator service or an internet service for the user equipment. The local DN may be identified by a data network access identifier (data network access identifier, DNAI) and a data network name (data network name, DNN).

The 3rd generation partnership project (3rd generation partnership project, 3GPP) standard TS 23.548 defines a new network element that assists in discovering the EAS, that is, an edge application server discovery function (edge application server discovery function, EASDF) network element, and a main function of the edge application server discovery function network element is to process a domain name system (domain name system, DNS) message based on an indication of the SMF, mainly including: reporting the DNS message to the SMF, adding an extended mechanisms for DNS-client-subnet option (extended mechanisms for DNS-client-subnet option, ECS option) to a DNS query (Query), forwarding the DNS query to a DNS server, forwarding a DNS response to the UE, and the like.

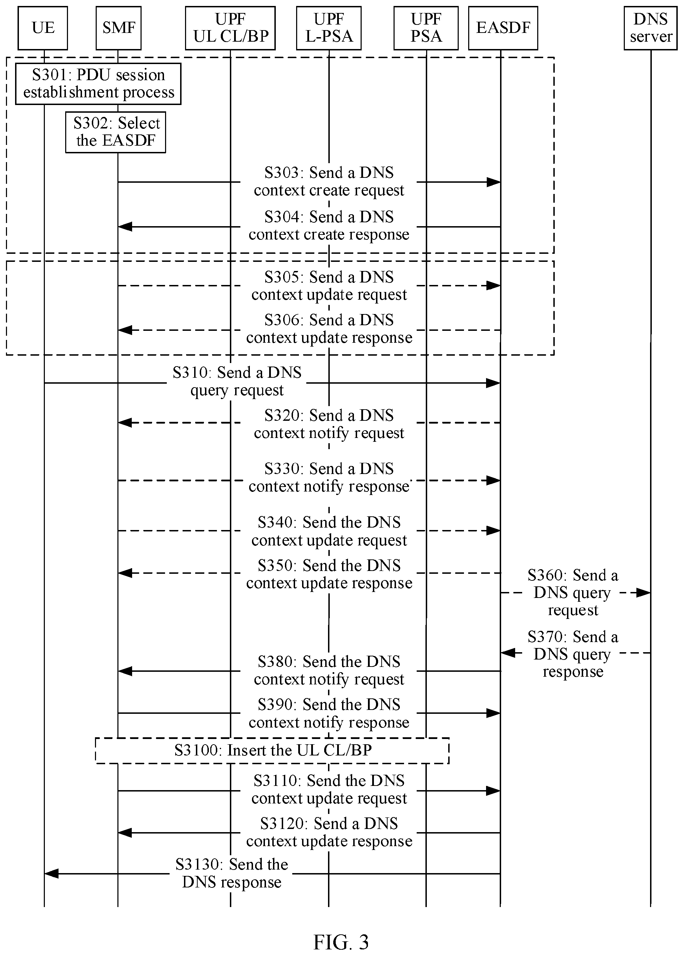

FIG. 3 is a schematic flowchart of a service discovery method.

As shown in FIG. 3, UE may obtain an EAS IP address through an EASDF in the following steps. S301: PDU session establishment process.

The PDU session establishment process includes establishing a session of a user plane path between the UE and a UPF. For a specific procedure, refer to a conventional technology. Details are not described herein.

S302: In the PDU session establishment process, an SMF selects the EASDF.

For example, this step may be triggered by receiving an Nsmf_PDUSession_CreateSMContext Request message by the SMF from an AMF in the PDU session establishment procedure. The SMF may select the EASDF with reference to one or more of the following information: a DNN of a PDU session, single-network slice selection assistance information (single-network slice selection assistance information, S-NSSAI), an address of the EASDF, a location of the EASDF, an address of a PSA UPF, a DNAI, and the like.

S303: The SMF sends a DNS context create request (Neasdf_DNSContext_Create Request) to the selected EASDF.

The DNS context create request may include a UE IP address, a callback URI, and a DNS message processing rule. The EASDF may create a DNS context for the PDU session based on the request message, and store the UE IP address, the callback URI, and the DNS message processing rule in the context.

S304: The EASDF sends a DNS context create response to the SMF.

After receiving the DNS context create request message from the SMF, the EASDF sends the DNS context create response to the SMF.

In the PDU session establishment procedure, the SMF may further send the address of the EASDF as an address of a DNS server to the UE through the AMF.

For example, the SMF may send the address of the EASDF to the AMF by using an Namf_Communication_N1N2MessageTransfer message, and then the AMF forwards the address of the EASDF to the UE by using a NAS message. The AMF does not perform processing, that is, performs transparent forwarding.

Optionally, in S305, the SMF sends a DNS context update request (Neasdf_DNSContext_UpdateRequest) message to the EASDF.

The update request message may be triggered by mobility of the UE, or the update request message may be triggered by insertion or removal of a PSA. The update request message may include an EASDF context ID and the DNS message processing rule.

S306: The EASDF sends a DNS context update response to the SMF.

S310: The UE sends a DNS query (Query) message to the EASDF. The DNS query message may include an FQDN.

S320: The EASDF sends a DNS message report to the SMF by invoking a DNS context notify request (Neasdf_DNSContext_Notify Request).

If the FQDN in the DNS query message matches the DNS message processing rule, the EASDF sends the DNS message report to the SMF by invoking the DNS context notify request.

S330: The SMF sends a DNS context notify response (Neasdf_DNSContext_Notify Response) to the EASDF.

Optionally, in S340, the SMF sends the DNS context update request (Neasdf_DNSContext_Update Request) to the EASDF.

Based on the FQDN and a location of the UE, the SMF may determine and return, to the EASDF, "information required for determining an EDNS client subnet (EDNS Client Subnet, ECS) option" (option A) or an address of a local (local) DNS (L-DNS) server (option B, option B).

The ECS option is a DNS message extension item defined by the international internet engineering task force (internet engineering task force, IETF), and represents the location of the UE, to assist the DNS server in parsing an IP address of a local EAS of the UE. The L-DNS is a local DNS server deployed for the UE, and even if the DNS query message does not include information representing the location of the UE, the DNS parses the IP address of the local EAS of the UE based on a location of the DNS.

S350: The EASDF sends the DNS context update response (Neasdf_DNSContext_Update Response) to the SMF.

S360: The EASDF sends a DNS query message to the DNS server.

For the option A, the EASDF adds an ECS option to the DNS query or replaces an original ECS option in the DNS query, and forwards the DNS query to a central (central) DNS server. For the option B, the EASDF forwards the DNS query message to the L-DNS server.

S370: The DNS server sends a DNS response (response) message to the EASDF.

The DNS response message may include the EAS IP address.

S380: The EASDF sends the DNS message report to the SMF by triggering the DNS context notify request (Neasdf_DNSContext_Notify request).

S390: The SMF sends the DNS context notify response (Neasdf_DNSContext_Notify Response) to the EASDF.

Optionally, in S3100, the SMF inserts a UL CL/BP.

Based on the EAS IP address received from the EASDF, the SMF may determine the DNAI and determine N6 traffic routing information associated with the DNAI. The SMF selects and inserts the UL CL/BP and a local PSA, to complete establishment of a data plane path for the UE.

After the data plane path of the UE is established, in S3110, the SMF sends the DNS context update request (Neasdf_DNSContext_Update Request) to the EASDF.

The update request message may include the DNS message processing rule.

S3120: The EASDF sends a DNS context update response (Neasdf_DNSContext_Update Response) to the SMF.

S3130: The EASDF sends the DNS response message to the UE.

For ease of understanding of embodiments of this application, the following provides example descriptions of some terms in this application. It may be understood that terms provided below are described by using a current NR system as an example. However, it should be understood that in other communication systems (for example, a future 6th generation communication system), the following terms may have other names. This is not limited in this application.

### 1. Extended reality (eXtended Reality, XR) technology

Development of communication technologies drives further improvement of experience of the new media industry. Video services become a mainstream media form, and XR emerging multimedia services such as virtual reality (VR, Virtual Reality) and augmented reality (AR, Augmented Reality) emerge. For example, a VR technology provides a user with more in-depth and immersive experience by blocking sight of the user and bringing the user in independent and new virtual space in terms of senses. A VR device (for example, a wearable VR head-mounted display) of the user captures motion information of the user, for example, a head motion, a hand motion, and crouching/standing up, and sends the motion information to a cloud server via a communication network (for example, a 5G network). The cloud server performs rendering based on the motion information of the user to generate an image, and sends the image to user equipment via the communication network for viewing.

Specifically, during downlink transmission, an encoder of a server generates data content at a fixed frequency (for example, 60 Hz or 120 Hz), and transmits the data content to an XR terminal through a core network and a RAN. During uplink transmission, the XR terminal may collect an image of a current scene through a built-in camera and continuously upload the image of the current scene to the server at a specific frequency (for example, 60 Hz or 120 Hz).

### 2. Media over quick user datagram protocol (Media over QUIC (Quick UDP Internet Connections), MoQ) transport protocol

MoQ is a media over QUIC transport protocol, and provides end-to-end encryption support. The MoQ protocol performs media transmission by using an object (object) (for example, a video frame) as a granularity, and corresponding metadata (metadata) of each object is carried together with the object. The metadata is assistance information for the object (for example, information such as a sequence number and a priority of the object).

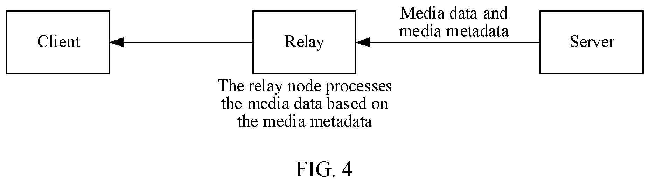

As shown in FIG. 4, an MoQ protocol architecture includes a client (Client), a relay (relay) node, and a server (server). The server sends media data and media metadata to the relay node, and the relay node may perform processing such as forwarding, buffering, and discarding on an object based on the received metadata corresponding to the object.

In a 3GPP study item on XR, a UPF is responsible for identifying media information and transmitting the media information to a base station through a GPRS tunneling protocol-user plane (User plane of GPRS Tunneling Protocol), and the base station schedules the media data based on the media information. To process an XR service flow transmitted based on the MoQ, the UPF needs to serve as a relay node to process the media information. However, because end-to-end encryption is used for the MoQ, if the UPF needs to identify the media information transmitted based on the MoQ protocol, a QUIC connection is to be established between UE and the UPF.

Therefore, how the UE obtains information about a UPF that supports an MoQ relay functionality to establish the QUIC connection is a problem to be urgently resolved currently.

In view of this, embodiments of this application provide a communication method and a communication apparatus, so that UE can obtain information that supports an MoQ relay, to establish a connection between the UE and the MoQ relay.

For ease of understanding of embodiments of this application, the following several points are described.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally represents an "or" relationship between associated objects. "At least one of the following items (pieces)" or a similar expression thereof indicates any combination of these items, including a single item (piece) or any combination of a plurality of items (pieces). For example, at least one (piece) of a, b, and c may indicate a, b, c, a and b, a and c, b and c, or a, b, and c. Each of a, b, and c may be singular or plural.

Third, in this application, "first", "second", and various numerical numbers (for example, #1 and #2) are merely used to distinguish for ease of description, but are not used to limit the scope of embodiments of this application, for example, are used to distinguish between different messages but not used to describe a specific order or sequence. It should be understood that objects described in such a way are interchangeable in an appropriate circumstance, so that a solution other than embodiments of this application can be described.

Fourth, in this application, the terms "including", "having", and any variants thereof are intended to cover non-exclusive inclusion. For example, a process, a method, a system, a product, or a device that includes a series of steps or units is not necessarily limited to those expressly listed steps or units, but may include other steps or units not expressly listed or inherent to such the process, the method, the product, or the device.

Fifth, in this application, "indicating" may include directly indicating and indirectly indicating. When a piece of indication information is described as indicating A, it may be included that the indication information directly indicates A or indirectly indicates A, but it does not indicate that the indication information definitely carries A.

Indication manners in embodiments of this application should be understood as covering various methods that can cause a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

"Indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Six, in this application, a "protocol" may be a standard protocol in the communication field, for example, may include a 5G protocol, an NR protocol, and a related protocol applied to a future communication system. This is not limited in this application. "Predefinition" may include being defined in advance, for example, defined in a protocol. "Pre-configuration" may be implemented by pre-storing corresponding code or table in a device, or in another manner that may indicate related information. A specific implementation thereof is not limited in this application.

Seventh, in this application, "storage" may refer to being stored in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in this application.

Eighth, in this application, if there is no logical conflict, "reporting", "feedback", and "sending" are interchangeable.

The following describes in detail a communication method provided in embodiments of this application with reference to the accompanying drawings. For example, the communication method may be applied to the communication system shown in FIG. 1.

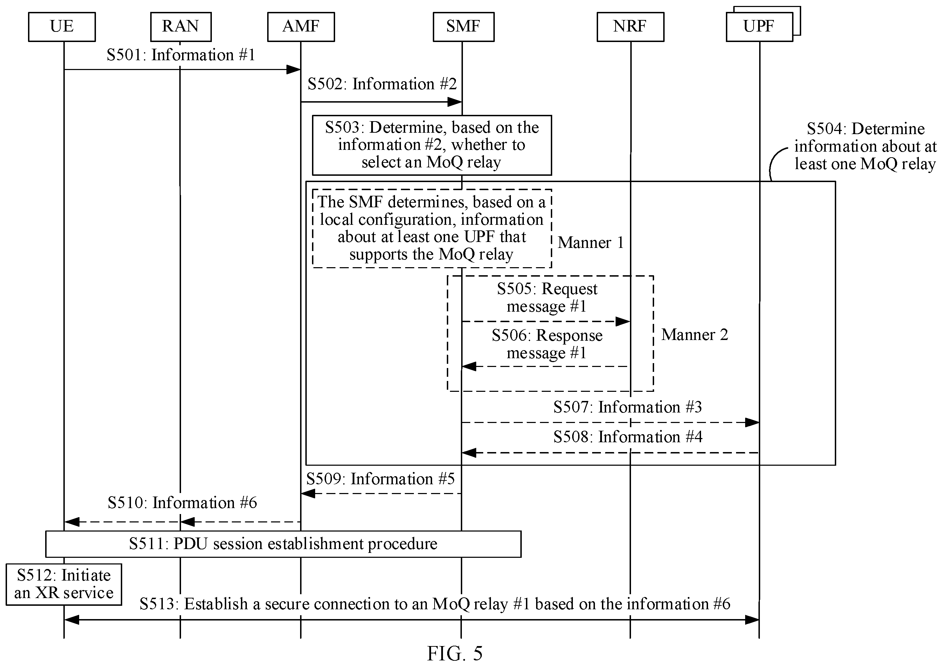

FIG. 5 is an example flowchart of a method 500 according to an embodiment of this application. The following provides example descriptions of the method 500 with reference to steps in FIG. 5. S501: UE sends information #1 (an example of fifth information) to an AMF, and correspondingly, the AMF receives the information #1.

The information #1 is carried in a data connection session establishment request message. The following uses an example in which a data connection session is a PDU session for description. In this case, the request message may be a PDU session establishment request (PDU Session Establishment Request) message, where the information #1 includes a DNN corresponding to the PDU session, and S-NSSAI.

It should be understood that the request message #1 is included in a NAS signaling message.

Correspondingly, an SMF receives the request message #1 from the AMF.

S502: The AMF sends information #2 (an example of first information) to the SMF, where the information #2 includes the foregoing DNN information and/or S-NSSAI information, and the information #2 may be carried in a PDU session SM context create request (Nsmf_PDUSession_CreateSMContext Request).

Specifically, after selecting the SMF based on the DNN information and the S-NSSAI information in the information #2, the AMF sends the information #2 to the SMF.

It should be noted that, in this application, when the information #2 includes the DNN and the S-NSSAI, the DNN and the S-NSSAI may be in a same information element, or may be in different information elements. This is not limited in this embodiment of this application.

It should be understood that, based on step S502, the SMF may obtain the information #2 corresponding to the PDU session that is requested to be established, where the information #2 includes the DNN and/or the S-NASSI, to perform the following steps.

S503: The SMF determines, based on the information #2, whether an MoQ relay needs to be selected for the PDU session.

Specifically, the SMF determines, based on a local configuration, and the DNN information and/or the S-NSSAI information that are/is carried in the information #2, whether a UPF that supports an MoQ relay functionality needs to be selected for the PDU session. The local configuration of the SMF may include an MoQ relay capability corresponding to the DNN, and/or an MoQ relay capability corresponding to the locally stored S-NSSAI.

By way of example but not limitation, the SMF may locally store a DNN list that requires the MoQ relay capability, and after receiving the information #2, compares the DNN in the information #2 with the locally stored DNN list, to determine whether the UPF that supports the MoQ relay functionality needs to be allocated to a PDU session corresponding to the DNN.

By way of example but not limitation, the SMF may locally store an S-NASSI list that does not need the MoQ relay functionality, and after receiving the information #2, compares the S-NASSI in the information #2 with the locally stored S-NASSI list, to determine whether the UPF that supports the MoQ relay functionality needs to be allocated to a PDU session corresponding to the S-NASSI.

It should be understood that, in this application, the UPF that supports the MoQ relay functionality may be understood as integrating the MoQ relay functionality into the UPF, or may be understood as that the UPF supports the MoQ relay functionality.

It should be understood that the following uses an example in which the UPF that supports the MoQ relay functionality needs to be selected for the PDU session for description.

S504: The SMF determines information about the MoQ relay.

It should be understood that a specific manner in which the SMF determines the information about the MoQ relay is not limited in this embodiment of this application.

In a possible implementation, if the local configuration of the SMF includes the information about the MoQ relay, the SMF may determine information about at least one MoQ relay based on the local configuration after determining, through step S503, to allocate the MoQ relay to the PDU session, (not shown in the figure).

It should be understood that the information about the MoQ relay includes an internet protocol (Internet Protocol, IP) address of the MoQ relay, and optionally, a port number of the MoQ relay, and/or MoQ connection context information. The MoQ connection context information is used to assist the UE in establishing a secure connection to the MoQ relay. For example, the MoQ connection context information may be security key information.

It should be understood that the MoQ relay IP may be one of a plurality of IPs of the UPF, or may be an IP independent of the UPF. This is not limited in this embodiment of this application.

In another possible implementation, the SMF first determines information about the UPF that supports the MoQ relay functionality, and then determines information about an MoQ relay corresponding to the UPF. The following describes, by using two manners as examples, specific manners in which the SMF determines the information about the UPF that supports the MoQ relay functionality.

### Manner 1

If the local configuration of the SMF includes the information about the UPF that supports the MoQ relay functionality, the SMF may determine, based on the local configuration, information about at least one UPF that supports the MoQ relay functionality (for example, an address of a UPF #1).

### Manner 2

The SMF requests an NRF network element to provide the information about the UPF that supports the MoQ relay functionality. Specifically, the following steps are included.

S505: The SMF sends a request message #1 (an example of a first request message) to the NRF, and correspondingly, the NRF receives the request message #1.

The request message #1 is used to request the NRF network element to provide information about a UPF that supports at least one MoQ relay functionality. The request message #1 includes information indicating MoQ relay capability information, to indicate that the NRF needs to return the information about the at least one UPF that supports the MoQ relay functionality.

It should be understood that the NRF is configured to maintain a profile (profile) of one or more UPFs. A profile of each UPF includes at least one of the following: location information of the UPF, capability information of the UPF, load information of the UPF, and the like. The capability information that is of the UPF and that is maintained by the NRF in this embodiment includes whether the UPF supports the MoQ relay functionality.

S506: The NRF returns a response message #1 (an example of a first response message) to the SMF, and correspondingly, the SMF receives the response message #1.

Before the NRF returns the response message #1, the NRF needs to determine, based on the MoQ relay capability information carried in the request message #1, at least one UPF that supports the MoQ relay, and include information about the at least one UPF in the response message #1.

Optionally, the profile that is of the UPF and that is maintained by the NRF further includes information about an MoQ relay corresponding to the UPF. To be specific, the NRF may further return, to the SMF by using the response message #1, information about an MoQ relay corresponding to at least one UPF.

It should be understood that, when the profile that is of the UPF and that is maintained by the NRF includes the information about the MoQ relay, the response message #1 may include only the information about the MoQ relay and does not include information about the UPF, so that the SMF does not need to sense information about a UPF corresponding to the at least one MoQ relay.

When the local configuration of the SMF or the profile that is of the UPF and that is maintained by the NRF includes only information about a UPF that supports the MoQ relay, the SMF may perform the following steps based on the information about the UPF.

S507: The SMF sends information #3 (an example of third information) to the at least one UPF, and correspondingly, the at least one UPF receives the information #3.

The information #3 is used to request to obtain information about an MoQ relay corresponding to each of the at least one UPF, or request information about an MoQ relay deployed in each of the at least one UPF. The information #3 may be carried in a session establishment request (N4 Session Establishment Request) message.

S508: The at least one UPF returns information #4 (an example of fourth information) to the SMF, and correspondingly, the SMF receives the information #4.

A information #4 includes the information about the MoQ relay corresponding to each of the at least one UPF, where the information #4 may be an N4 session establishment response message.

Further, after determining the information about the MoQ relay based on the foregoing possible implementations, the SMF performs the following steps.

S509: The SMF returns information #5 (an example of second information) to the AMF, and correspondingly, the AMF receives the information #5.

Specifically, the SMF includes the information about the MoQ relay in the information #5 and sends the information #5 to the AMF. The information #5 may be carried in an information transfer (Namf_Communication_N1N2MessageTransfer) message.

S510: The AMF sends information #6 (an example of sixth information) to the UE, where the information #6 includes the information about the MoQ relay.

The AMF includes the information about the MoQ relay in NAS signaling and sends the information about the MoQ relay to the UE via a RAN. Specifically, the information about the MoQ relay may include the MoQ relay IP, and optionally, the port number of the MoQ relay, and/or the MoQ connection context information.

S511: Complete a subsequent step of the PDU session establishment procedure. For details, refer to an existing procedure. Details are not described herein.

S512: The UE initiates an XR service.

S513: The UE establishes a secure connection to an MoQ relay #1 (that is, a first MoQ relay) based on the information that is about the at least one MoQ relay and that is included in the information #6, so that transmission of XR service data carried in the PDU session can be performed through the secure connection.

It should be understood that a specific manner in which the UE determines the MoQ relay #1 from the at least one MoQ relay is not limited in this embodiment of this application.

It should be understood that when the information about the MoQ relay includes the MoQ connection context information, the UE further establishes a secure connection to the MoQ relay based on the MoQ connection context information.

Based on the foregoing method, the UE may obtain the information about the MoQ relay in the PDU session establishment process, to establish a connection between the UE and the MoQ relay, so that the MoQ relay corresponding to the UPF can identify and process the XR service data carried in the PDU session.

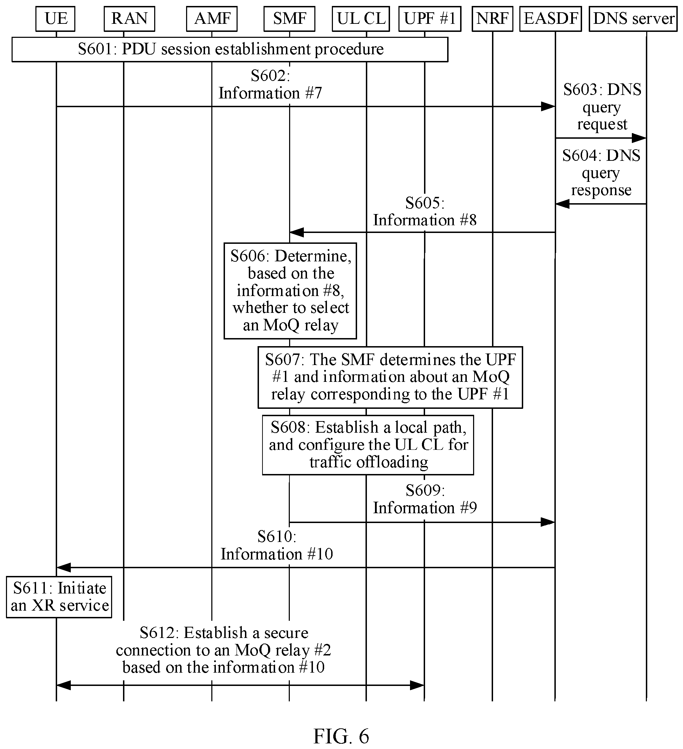

FIG. 6 is an example flowchart of a method 600 according to an embodiment of this application. The following provides example descriptions of the method 600 with reference to steps in FIG. 6. S601: PDU session establishment procedure.

The PDU session establishment process includes establishing a session of a user plane path between UE and a UPF. For a specific procedure, refer to a conventional technology. Details are not described herein.

S602: The UE sends information #7 (another example of fifth information) to an EASDF, and correspondingly, the EASDF receives the information #7.

The information #7 may be carried in a DNS query request message, and the information #7 includes a fully qualified domain name FQDN of an application that the UE requests to access.

S603: The EASDF sends a DNS query request message to a DNS server, and correspondingly, the DNS server receives the DNS query request message.

S604: The DNS server sends a DNS response message to the EASDF, where the DNS response message may include an EAS IP address.

S605: The ESADF sends information #8 (another example of first information) to an SMF, and correspondingly, the SMF receives the information #8, where the information #8 may be carried in a DNS context notify request message, and the information #8 includes the FQDN carried in the information #7.

S606: The SMF determines, based on the information #8, whether an MoQ relay needs to be selected for the application.

Specifically, the SMF determines, based on a local configuration and the FQDN carried in the information #8, whether an MoQ relay functionality needs to be selected for the application. The local configuration of the SMF may include an MoQ relay capability corresponding to the FQDN. By way of example but not limitation, the SMF may locally store an FQDN list that requires the MoQ relay capability, and after receiving a request message #5, compares an FQDN in the request message #5 with the locally stored FQDN list, to determine whether a UPF that supports the MoQ relay functionality needs to be allocated to an application corresponding to the FQDN. The following uses an example in which a UPF that supports the MoQ relay functionality needs to be selected for a session for description.

It should be understood that a UPF that supports the MoQ relay functionality may be understood as deploying the MoQ relay functionality in the UPF.

S607: The SMF determines a UPF #1 and information about an MoQ relay corresponding to the UPF #1.

For a specific manner in which the SMF determines the UPF #1 and information about an MoQ relay #2 (another example of a first MoQ relay) corresponding to the UPF #1, refer to the related descriptions of step S504. Details are not described herein again. It should be noted that, in step S607, the SMF needs to sense a UPF corresponding to the MoQ relay. To be specific, when determining the information about the MoQ relay #2 based on the local configuration, the SMF also needs to determine information about the UPF #1 on which the MoQ relay #2 is deployed.

It should be understood that a specific manner in which the SMF selects the UPF #1 based on information about at least one UPF and selects the MoQ relay #2 corresponding to the UPF #1 is not limited in this embodiment of this application.

S608: Establish a local path, and perform traffic offloading based on a UL CL, where specifically, the SMF establishes the local path based on the selected UPF, and configure the UL CL for traffic offloading.

S609: The SMF sends information #9 (another example of second information) to the EASDF, and correspondingly, the EASDF receives the information #9, where the information #9 may be carried in a DNS context update request (Neasdf_DNSContext_Update Request) message, and
the information #9 includes the information that is about the MoQ relay and that is obtained by the SMF in step S607, to indicate the EASDF to send the information about the MoQ relay to the UE.

S610: The EASDF sends information #10 (another example of sixth information) to the UE, and correspondingly, the UE receives the information #10, where the information #10 may be carried in the DNS response (DNS Response) message.

Specifically, the EASDF sends, to the UE based on the received DNS context update request, a response message including the information about the MoQ relay.

S611: The UE initiates an XR service.

S612: The UE establishes a secure connection to the MoQ relay based on the information about the MoQ relay, so that transmission of XR service data corresponding to the application can be performed through the secure connection.

It should be understood that when the information about the MoQ relay includes MoQ connection context information, the UE further establishes a secure connection to the MoQ relay based on the MoQ connection context information.

Based on the foregoing method, the UE may obtain the information about the MoQ relay in a DNS querying process, to establish a connection between the UE and the MoQ relay, so that an MoQ relay corresponding to the UPF can identify and process the XR service data corresponding to the application.

It should be understood that specific examples shown in FIG. 5 and FIG. 6 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not constitute any limitation on implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a network element (for example, the AMF, the SMF, the NRF, or the EASDF) in an existing network architecture is mainly used as an example for description. It should be understood that a specific form of the network element is not limited in embodiments of this application. For example, all network elements that can implement a same function in the future are applicable to embodiments of this application.

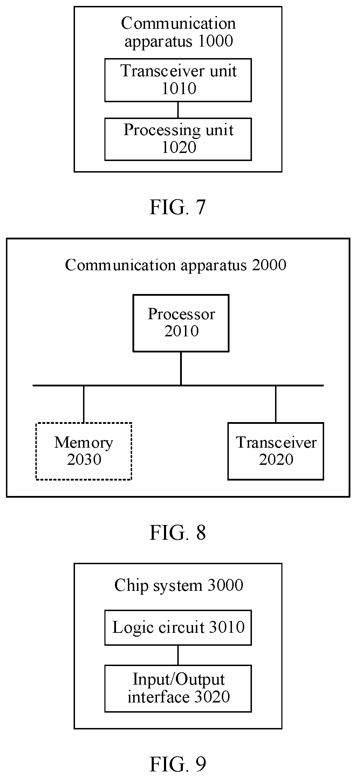

The foregoing describes in detail embodiments on a communication method side in this application with reference to FIG. 1 to FIG. 6. The following describes in detail embodiments on a communication apparatus side in this application with reference to FIG. 7 to FIG. 9. It should be understood that descriptions of the apparatus embodiments correspond to the descriptions of the method embodiments. Therefore, for a part that is not described in detail, refer to the foregoing method embodiments.

FIG. 7 is a diagram of a structure of a communication apparatus 1000 according to an embodiment of this application. As shown in FIG. 7, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures that are performed by the core network element (for example, the SMF, the NRF, or the UPF) that correspond to the foregoing method embodiments. The processing unit 1020 is configured to perform processing-related operations of the core network element in the foregoing method embodiments, and the transceiver unit 1010 is configured to perform sending and receiving-related operations of the core network element in the foregoing method embodiments.

By way of example but not limitation, the apparatus 1000 may be configured to perform actions performed by the SMF in the foregoing method embodiments.

The transceiver unit 1010 is configured to receive first information, where the first information includes information about an application, or the first information includes a data network name and/or single-network slice selection assistance information, where the data network name and/or the single-network slice selection assistance information correspond/corresponds to a data connection session, and transmission of data of the application or the data connection session is performed via MoQ. The processing unit 1020 is configured to obtain information about at least one MoQ relay based on the first information, where the information about the at least one MoQ relay is used to establish a connection between user equipment and a first MoQ relay of the at least one MoQ relay. The transceiver unit 1010 is further configured to send second information, where the second information includes the information that is about the at least one MoQ relay and that is sent to the user equipment.

In another possible design, the apparatus 1000 may implement steps or procedures and that are performed by the user equipment and that correspond to the foregoing method embodiments. The transceiver unit 1010 is configured to perform sending and receiving-related operations of the user equipment in the foregoing method embodiments. The processing unit 1020 is configured to perform processing-related operations of the user equipment in the foregoing method embodiments.

The transceiver unit 1010 is configured to send fifth information, where the fifth information includes information about an application, or the fifth information includes a data network name and/or single-network slice selection assistance information, where the data network name and/or the single-network slice selection assistance information correspond/corresponds to a data connection session, and transmission of data of the application or the data connection session is performed via MoQ. The transceiver unit 1010 is further configured to receive sixth information, where the sixth information includes information about at least one MoQ relay. The processing unit 1020 is configured to establish a connection to a first MoQ relay of the at least one MoQ relay based on the information about the at least one MoQ relay.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1000 may be specifically the transmit end in the foregoing embodiments, and may be configured to perform procedures and/or steps corresponding to the transmit end in the foregoing method embodiments. Alternatively, the apparatus 1000 may be specifically the receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing function. For example, the transceiver unit may be replaced by a transceiver machine (for example, a sending unit in the transceiver unit may be replaced by a transmitter, and a receiving unit in the transceiver unit may be replaced by a receiver), and another unit, for example, the processing unit, may be replaced by a processor, to separately perform the receiving and sending operations and the related processing operations in the method embodiments.

In addition, the transceiver unit may alternatively be a transceiver circuit (for example, may include a receiving circuit and a sending circuit), and the processing unit may be a processing circuit. In this embodiment of this application, the apparatus 1000 may be a receiving device or a sending device in the foregoing embodiments, or may be a chip or a chip system in the receiving device or the sending device, for example, a system on a chip (system on a chip, SoC). The transceiver unit may be an input/output circuit or the communication interface. The processing unit is a processor, a microprocessor, or an integrated circuit integrated on the chip. This is not limited herein.

FIG. 8 is a diagram of a structure of a communication apparatus 2000 according to an embodiment of this application. As shown in FIG. 8, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement procedures and steps corresponding to the core network elements (for example, the SMF, the NRF, or the UPF) in the foregoing method embodiments.

In another possible implementation, the apparatus 2000 is configured to implement procedures and steps corresponding to the user equipment in the foregoing method embodiments.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

During implementation, steps in the foregoing methods can be completed by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

It should be noted that, the processor in this embodiment of this application may be an integrated circuit chip, and has a signal processing capability. During implementation, steps in the foregoing method embodiments can be completed by using a hardware integrated logic circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in this embodiment of this application may implement or perform methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and the software module. The software module may be located in the mature storage medium in the art, like the random access memory, the flash memory, the read-only memory, the programmable read-only memory, the electrically erasable programmable memory, or the register. The storage medium is located in the memory, and the processor reads the information in the memory and completes the steps in the foregoing methods in combination with the hardware in the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these memories and any memory of another appropriate type.

FIG. 9 is a diagram of a structure of a chip system 3000 according to an embodiment of this application. As shown in FIG. 9, the chip system 3000 (or may also be referred to as a processing system) includes a logic circuit 3010 and an input/output interface (input/output interface) 3020. The logic circuit 3010 may be a processing circuit in the chip system 3000. The logic circuit 3010 may be coupled and connected to a storage unit, and invoke instructions in a storage unit, to cause the chip system 3000 to implement methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the core network element (for example, the SMF, the NRF, or the UPF) in the foregoing method embodiments.

In a solution, the chip system 3000 is configured to implement operations performed by the user equipment in the foregoing method embodiments.

An embodiment of this application further provides a computer-readable storage medium, and the computer-readable storage medium stores computer instructions used to implement methods performed by the core network element (for example, the SMF, the NRF, or the UPF) and the user equipment in the foregoing method embodiments.

An embodiment of this application further provides a computer program product, including computer program code or instructions. When the computer program code or the instructions are run on a computer, the computer is caused to implement methods performed by the core network element and the user equipment in the foregoing method embodiments.

An embodiment of this application further provides a communication system, including the foregoing core network element (for example, the SMF, the NRF, or the UPF) and user equipment. For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. A part or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device to perform all or a part of steps of the methods described in embodiments of this application. The foregoing storage medium includes: any medium that can store program code, like a USB flash disk, a removable hard disk drive, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a session management network element, first information, wherein the first information comprises information about an application, or the first information comprises a data network name and/or single-network slice selection assistance information, wherein the data network name and/or the single-network slice selection assistance information correspond/corresponds to a data connection session, and transmission of data of the application or the data connection session is performed via a media over quick user datagram protocol MoQ transport protocol;
obtaining, by the session management network element, information about at least one MoQ relay based on the first information, wherein the information about the at least one MoQ relay is used to establish a connection between user equipment and a first MoQ relay of the at least one MoQ relay; and
sending, by the session management network element, second information, wherein the second information comprises the information that is about the at least one MoQ relay and that is sent to the user equipment.

2. The method according to claim 1, wherein the method further comprises:
when the first information comprises the information about the application, determining, by the session management network element based on the information about the application, to select an MoQ relay for the user equipment accessing the application; and
when the first information comprises the data network name and/or the single-network slice selection assistance information, determining, by the session management network element based on the data network name and/or the single-network slice selection assistance information, to select an MoQ relay for the data connection session.

3. The method according to claim 2, wherein the obtaining, by the session management network element, the information about the at least one MoQ relay based on the first information comprises:
determining, by the session management network element, the information about the at least one MoQ relay based on a local configuration, wherein the local configuration comprises the information about the at least one MoQ relay.

4. The method according to claim 2, wherein the MoQ relay is deployed in a user plane network element, and the obtaining, by the session management network element, the information about the at least one MoQ relay based on the first information comprises:
determining, by the session management network element, information about at least one user plane network element based on a local configuration, wherein the local configuration comprises the information about the at least one user plane network element and information about an MoQ relay deployed in each of the at least one user plane network element; and
determining, by the session management network element based on the information about the at least one user plane network element, the information about the MoQ relay deployed in each of the at least one user plane network element.

5. The method according to claim 2, wherein the MoQ relay is deployed in a user plane network element, and the obtaining, by the session management network element, the information about the at least one MoQ relay based on the first information comprises:
determining, by the session management network element based on a local configuration, information about at least one user plane network element in which the MoQ relay is deployed;
sending, by the session management network element based on the information about the at least one user plane network element in which the MoQ relay is deployed, third information to the at least one user plane network element in which the MoQ relay is deployed, wherein the third information is used to request to obtain information about MoQ relay deployed in a corresponding user plane network element; and
receiving, by the session management network element, fourth information, wherein the fourth information comprises the information about the MoQ relay deployed in the corresponding user plane network element.

6. The method according to claim 2, wherein the MoQ relay is deployed in a user plane network element, and the obtaining, by the session management network element, the information about the at least one MoQ relay based on the first information comprises:
sending, by the session management network element, a first request message to a network repository function, wherein the first request message comprises information indicating that an MoQ relay is supported, the network repository function is configured to maintain information about at least one user plane network element and the information about the at least one MoQ relay, and the at least one user plane network element corresponds to the at least one MoQ relay; and
receiving, by the session management network element, a first response message from the network repository function, wherein the first response message comprises the information about the at least one user plane network element and information about an MoQ relay deployed in each of the at least one user plane network element.

7. The method according to claim 2, wherein the MoQ relay is deployed in a user plane network element, and the obtaining, by the session management network element, the information about the at least one MoQ relay based on the first information comprises:
sending, by the session management network element, a first request message to a network repository function, wherein the first request message comprises information indicating that an MoQ relay is supported, the network repository function is configured to maintain information about at least one user plane network element, and the at least one user plane network element supports the MoQ relay;
receiving, by the session management network element, a first response message from the network repository function, wherein the first response message comprises the information about the at least one user plane network element;
sending, by the session management network element, third information to the at least one user plane network element based on the information about the at least one user plane network element, wherein the third information is used to request information about the MoQ relay deployed in a corresponding user plane network element; and
receiving, by the session management network element, fourth information, wherein the fourth information comprises the information about the MoQ relay deployed in the corresponding user plane network element.

8. The method according to any one of claims 1 to 7, wherein information about the MoQ relay in the information about the at least one MoQ relays comprises at least one of the following:
an address of the MoQ relay, port information of the MoQ relay, or connection context information of the MoQ relay.

9. A communication method, comprising:
receiving, by a network repository function, a first request message, wherein the first request message comprises information indicating that a media over quick user datagram protocol transport protocol MoQ relay is supported, and the network repository function is configured to maintain information about at least one user plane network element, and/or information about at least one MoQ relay; and
sending, by the network repository function, a first response message, wherein the first response message comprises the information about the at least one user plane network element in which the MoQ relay is deployed, and/or the information about the at least one MoQ relay.

10. The method according to claim 9, wherein information about the MoQ relay in the information about the at least one MoQ relays comprises at least one of the following:
an address of the MoQ relay, port information of the MoQ relay, or connection context information of the MoQ relay.

11. A communication method, comprising:
sending, by user equipment, fifth information, wherein the fifth information comprises information about an application, or the fifth information comprises a data network name and/or single-network slice selection assistance information, wherein the data network name and/or the single-network slice selection assistance information correspond/corresponds to a data connection session, and transmission of data of the application or the data connection session is performed via a media over quick user datagram protocol MoQ transport protocol;
receiving, by the user equipment, sixth information, wherein the sixth information comprises information about at least one MoQ relay; and
establishing, by the user equipment, a connection to a first MoQ relay of the at least one MoQ relay based on the information about the at least one MoQ relay.

12. The method according to claim 11, wherein the information about the at least one MoQ relay is determined based on the information about the application, or the information about the at least one MoQ relay is determined based on the data network name and/or the single-network slice selection assistance information.

13. The method according to claim 11 or 12, wherein the fifth information is comprised in a data connection session establishment request message, the data connection session is established based on the data connection session establishment request message, and the information about the at least one MoQ relay is determined for the data connection session.

14. The method according to claim 11 or 12, wherein the fifth information is comprised in a domain name system query request message, and the information about the at least one MoQ relay is determined for the application.

15. The method according to any one of claims 11 to 14, wherein information about the MoQ relay in the information about the at least one MoQ relays comprises at least one of the following:
an address of the MoQ relay, port information of the MoQ relay, or connection context information of the MoQ relay.

16. A communication apparatus, comprising:
a transceiver unit, configured to receive first information, wherein the first information comprises information about an application, or the first information comprises a data network name and/or single-network slice selection assistance information, wherein the data network name and/or the single-network slice selection assistance information correspond/corresponds to a data connection session, and transmission of data of the application or the data connection session is performed via a media over quick user datagram protocol MoQ transport protocol; and
a processing unit, configured to obtain information about at least one MoQ relay based on the first information, wherein the information about the at least one MoQ relay is used to establish a connection between user equipment and a first MoQ relay of the at least one MoQ relay, wherein
the transceiver unit is further configured to send second information, wherein the second information comprises the information that is about the at least one MoQ relay and that is sent to the user equipment.

17. The apparatus according to claim 16, wherein the processing unit is further configured to:
when the first information comprises the information about the application, determine, by the session management network element based on the information about the application, to select an MoQ relay for the user equipment accessing the application; and
when the first information comprises the data network name and/or the single-network slice selection assistance information, determine, by the session management network element based on the data network name and/or the single-network slice selection assistance information, to select an MoQ relay for the data connection session.

18. The apparatus according to claim 17, wherein the processing unit is specifically configured to:
determine the information about the at least one MoQ relay based on a local configuration, wherein the local configuration comprises the information about the at least one MoQ relay.

19. The apparatus according to claim 17, wherein the MoQ relay is deployed in a user plane network element, and the processing unit is further configured to:
determine information about at least one user plane network element based on a local configuration, wherein the local configuration comprises the information about the at least one user plane network element and information about an MoQ relay deployed in each of the at least one user plane network element; and
determine, based on the information about the at least one user plane network element, the information about the MoQ relay deployed in each of the at least one user plane network element.

20. The apparatus according to claim 17, wherein the MoQ relay is deployed in a user plane network element, and
the processing unit is further configured to determine, based on a local configuration, information about at least one user plane network element in which the MoQ relay is deployed;
the processing unit is further configured to send, based on the information about the at least one user plane network element in which the MoQ relay is deployed, third information to the at least one user plane network element in which the MoQ relay is deployed, wherein the third information is used to request to obtain the information about the at least one MoQ relay; and
the transceiver unit is further configured to receive fourth information, wherein the fourth information comprises the information about the at least one MoQ relay.

21. The apparatus according to claim 17, wherein the MoQ relay is deployed in a user plane network element, and the transceiver unit is further configured to:
send a first request message to a network repository function, wherein the first request message comprises information indicating that an MoQ relay is supported, the network repository function is configured to maintain information about at least one user plane network element and the information about the at least one MoQ relay, and the at least one user plane network element corresponds to the at least one MoQ relay; and
receive a first response message from the network repository function, wherein the first response message comprises the information about the at least one user plane network element and information about an MoQ relay deployed in each of the at least one user plane network element.

22. The apparatus according to claim 17, wherein the MoQ relay is deployed in a user plane network element, and
the transceiver unit is further configured to: send a first request message to a network repository function, wherein the first request message comprises information indicating that an MoQ relay is supported, the network repository function is configured to maintain information about at least one user plane network element, and the at least one user plane network element supports the MoQ relay; and
receive a first response message from the network repository function, wherein the first response message comprises the information about the at least one user plane network element;
the processing unit is further configured to send third information to the at least one user plane network element based on the information about the at least one user plane network element, wherein the third information is used to request information about the MoQ relay deployed in a corresponding user plane network element; and
the transceiver unit is further configured to receive fourth information, wherein the fourth information comprises the information about the MoQ relay deployed in the corresponding user plane network element.

23. The apparatus according to any one of claims 16 to 22, wherein information about the MoQ relay in the information about the at least one MoQ relays comprises at least one of the following:
an address of the MoQ relay, port information of the MoQ relay, or connection context information of the MoQ relay.

24. A communication apparatus, comprising:
a transceiver unit, configured to receive a first request message, wherein the first request message comprises information indicating that a media over quick user datagram protocol transport protocol MoQ relay is supported, and the network repository function is configured to maintain information about at least one user plane network element, and/or information about at least one MoQ relay, wherein
the transceiver unit is further configured to send a first response message, wherein the first response message comprises the information about the at least one user plane network element in which the MoQ relay is deployed, and/or the information about the at least one MoQ relay.

25. The apparatus according to claim 24, wherein information about the MoQ relay in the information about the at least one MoQ relays comprises at least one of the following:
an address of the MoQ relay, port information of the MoQ relay, or connection context information of the MoQ relay.

26. A communication apparatus, comprising:
a transceiver unit, configured to send fifth information, wherein the fifth information comprises information about an application, or the fifth information comprises a data network name and/or single-network slice selection assistance information, wherein the data network name and/or the single-network slice selection assistance information correspond/corresponds to a data connection session, and transmission of data of the application or the data connection session is performed via a media over quick user datagram protocol MoQ transport protocol, wherein
the transceiver unit is further configured to receive sixth information, wherein the sixth information comprises information about at least one MoQ relay; and
a processing unit, configured to establish a connection to a first MoQ relay of the at least one MoQ relay based on the information about the at least one MoQ relay.

27. The apparatus according to claim 26, wherein the information about the at least one MoQ relay is determined based on the information about the application, or the information about the at least one MoQ relay is determined based on the data network name and/or the single-network slice selection assistance information.

28. The apparatus according to claim 26 or 27, wherein the fifth information is comprised in a data connection session establishment request message, the data connection session is established based on the data connection session request message, and the information about the at least one MoQ relay is determined for the data connection session.

29. The apparatus according to claim 26 or 27, wherein the fifth information is comprised in a domain name system query request message, and the information about the at least one MoQ relay is determined for the application.

30. The apparatus according to any one of claims 26 to 29, wherein information about the MoQ relay in the information about the at least one MoQ relays comprises at least one of the following:
an address of the MoQ relay, port information of the MoQ relay, or connection context information of the MoQ relay.

31. A communication apparatus, comprising:
a processor, wherein the processor is coupled to a memory, and the processor is configured to invoke computer program instructions stored in the memory, to perform the method according to any one of claims 1 to 8, the method according to claim 9 or 10, or the method according to any one of claims 11 to 15.

32. A chip, comprising a processor and a communication interface, wherein the communication interface is configured to: receive data and/or information, and transmit the received data and/or information to the processor, and the processor processes the data and/or the information, to perform the method according to any one of claims 1 to 8, the method according to claim 9 or 10, or the method according to any one of claims 11 to 15.

33. A computer-readable storage medium, wherein the computer-readable storage medium stores instructions, and when the instructions are run on a computer, the computer is caused to perform the method according to any one of claims 1 to 8, the method according to claim 9 or 10, or the method according to any one of claims 11 to 15.

34. A computer program product, wherein the computer-readable storage medium stores instructions, and when the instructions are run on a computer, the computer is caused to perform the method according to any one of claims 1 to 8, the method according to claim 9 or 10, or the method according to any one of claims 11 to 15.

35. A communication system, comprising:
a session management network element, configured to perform the method according to any one of claims 1 to 8;
a network repository function, configured to perform the method according to claim 9 or 10; and
user equipment, configured to perform the method according to any one of claims 11 to 15.

36. A communication system, comprising the communication apparatus according to any one of claims 16 to 23, the communication apparatus according to claim 24 or 25, and the communication apparatus according to any one of claims 26 to 30.
